# EUROPEAN PATENT APPLICATION

(11) **EP 4 745 064 A2**
(43) Date of publication of application: **20.05.2026**
(21) Application number: 25211696.7
(22) Date of filing: 28.10.2025
(51) Int. Cl.: B65G 54/02, B65G 35/06, B60L 13/03

(54) **SYSTEM AND METHOD TO REDUCE PARTICULATE GENERATION IN AN INDEPENDENT CART SYSTEM**

(30) Priority: 15.11.2024 US 202418949460
(71) Applicant: Rockwell Automation Technologies, Inc., Mayfield Heights, OH 44124 (US)
(72) Inventor: Gardner, Eric M., Mequon, WI, 53092 (US); Rasmuson, Anders H., Devens, MA, 01434 (US); Choumach, Azeddine, Devens, MA, 01434 (US); Balcerak, John A., Mequon, WI, 53092 (US); Battyani, Nicolas, Devens, MA, 01434 (US)
(74) Representative: Grünecker Patent- und Rechtsanwälte PartG mbB

(57) **Abstract**

An independent cart system with reduced particulate generation includes a mover configured to travel along a track. The mover includes wheels mounted to the mover, multiple sealing elements, and multiple dampening elements. Each wheel is operative to engage the track as the mover travels along the track, and each wheel includes a rolling bearing. At least one of the sealing elements is mounted adjacent to each rolling bearing for the wheels to prevent particulate generated by the rolling bearing from leaving the mover. The dampening elements reduce vibration on the mover as the mover travels along the track. A platform is mounted to an upper surface of a drive block for each mover by a fastener. At least one rolling bearing is mounted between the fastener and either the platform or the drive block.

## Description

### BACKGROUND INFORMATION

The subject matter disclosed herein relates to a system and method for reducing vibration and wear on vehicles in an independent cart system. More specifically, replacement of sliding parts with rolling parts, providing improved alignment between track segments, and sealing chambers in which particulate may be generated from an ambient environment reduce particulates generated by the vehicle and distributed into the ambient environment.

Motion control systems utilizing independent cart technology employ a linear drive system embedded within a track and multiple vehicles, also referred to as "movers" or carts, that are propelled along the track via the linear drive system. Movers and linear drive systems can be used in a wide variety of processes (e.g. packaging, manufacturing, and machining) and can provide an advantage over conventional conveyor belt systems with enhanced flexibility, extremely high-speed movement, and mechanical simplicity. The independently controlled movers or carts are each supported on a track for motion along the track. The track is made up of a number of track segments that, in turn, hold individually controllable electric coils. Successive activation of the coils establishes a moving electromagnetic field that interacts with the movers and causes the mover to travel along the track. Sensors may be spaced at fixed positions along the track and/or on the movers to provide information about the position and speed of the movers. Each of the movers may be independently moved and positioned along the track in response to the electromagnetic fields generated by the coils.

As is known to those skilled in the art, certain processes require controlled environments for successful completion of the controlled process. A controlled environment may, for example, require a specific range of ambient temperatures or pressures within the manufacturing environment. Still other processes require separation of certain materials to prevent contamination. One example of a more stringent controlled environment is a cleanroom. The cleanroom may require specific temperatures and pressures but, more importantly, are classified according to a maximum number of particles present within the air per cubic meter. The International Organization for Standardization (ISO) has issued a specification, ISO 14644-1 which is incorporated herein by reference in its entirety, defining nine separate categories. These categories range from ISO 1, defining the fewest particles present in the atmosphere, to ISO 9, defining the most particles present in the atmosphere while still retaining a clean room designation. Different ratings between ISO 1 and ISO 9 are suitable for different manufacturing processes.

As is also known to those skilled in the art, traditional independent cart systems have been designed for general manufacturing facilities without a cleanroom designation. Particulate matter is generated by wear experienced by vehicles as they travel along the track. The amount of particulate matter generated by the movers has previously made these independent cart systems unsuited for use in a cleanroom environment.

Thus, it would be desirable to provide an independent cart system suitable for use in a cleanroom environment.

It is another feature of the invention to reduce vibration, provide rolling surfaces, and contain particulate matter generated by interaction of vehicles and tracks in the independent cart system to make the independent cart system suitable for use in a cleanroom environment.

### BRIEF DESCRIPTION

According to one embodiment of the invention, a system for reducing particulate generation in an independent cart system includes a mover configured to travel along a track having a multiple track segments. The mover includes multiple wheels, multiple sealing elements, and multiple dampening elements. Each wheel is mounted to the mover and operative to engage the track as the mover travels along the track. Each wheel includes a rolling bearing by which the corresponding wheel is mounted to the mover. At least one of the sealing elements is mounted adjacent to the rolling bearing for each of the wheels to prevent particulate generated by the rolling bearing from leaving the mover. Each dampening element reduces vibration on the mover as the mover travels along the track, and at least one of the dampening elements is mounted to each of the plurality of wheels.

According to another embodiment of the invention, a system for reducing particulate generation in an independent cart system includes a track having multiple track segments. Each track segment includes a first end with a first portion of an alignment bracket integrally formed in the first end of the track segment, and a second end with a second portion of the alignment bracket integrally formed in the second end of the track segment. The track also includes multiple removable alignment brackets and multiple coils spaced along the track. Each removable alignment bracket mounts over the first portion of the alignment bracket on a first track segment and the second portion of the alignment bracket on a second track segment to align the first track segment in three dimensions with the second track segment. The system also includes a mover configured to travel along the track. The mover has multiple wheels mounted to the mover and operative to engage the track as the mover travels along the track. Each wheel includes a rolling bearing by which the corresponding wheel is mounted to the mover. Each mover also includes a drive block containing multiple drive magnets, where a magnetic field generated by the drive magnets is operative to engage an electromagnetic field generated by the coils to drive the mover along the track. A platform is mounted to an upper surface of the drive block by a fastener extending through the platform to the drive block to secure the platform to the drive block. At least one rolling bearing is mounted between the fastener and either the platform or the drive block to provide rotational motion between the fastener and the platform or the drive block.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is a is a schematic representation of an exemplary control system for an independent cart system according to one embodiment of the invention;
FIG. 2 is a sectional view of one embodiment of a mover and track segment included in the linear drive system taken at 2-2 of Fig. 1;
FIG. 3 is a partial top cutaway view of the mover and track segment of Fig. 1;
FIG. 4 is a perspective view of the mover of Fig. 2;
FIG. 5 is an end elevational view of the mover of Fig. 2;
FIG. 6 is a side elevational view of the mover of Fig. 2;
FIG. 7 is a top plan view of the mover of Fig. 2;
FIG. 8 is a sectional view of the mover of Fig. 2 taken at 8-8 in Fig. 7;
FIG. 9 is a sectional view of the mover of Fig. 2 taken at 9-9 in Fig. 7;
FIG. 10 is a partial section view of the mover of Fig. 9 illustrating the fastener between the platform and the drive block;
FIG. 11 is a partial section view of the mover of Fig. 8 illustrating one of the wheels and the fastener securing the wheel to the drive block;
FIG. 12 is a perspective view of one embodiment of a switch track segment connected to a straight track segment for the independent cart system;
FIG. 13 is a partial side elevation view of the joint between the switch track segment and the straight track segment of Fig. 12 with an alignment bracket spanning the joint;
FIG. 14 is a top plan view of the alignment bracket spanning the joint between the switch track segment and the straight track segment of Fig. 12;
FIG. 15 is a sectional view through the alignment bracket of Fig. 14;
FIG. 16 is a partial side elevation view of the joint between the switch track segment and the straight track segment of Fig. 12 without the alignment bracket spanning the joint;
FIG. 17 is a perspective view of the alignment bracket of Fig. 12;
FIG. 18 is a front plan view of the alignment bracket of Fig. 17;
FIG. 19 is a side elevational view of the alignment bracket of Fig. 17;
FIG. 20 is an end elevational view of the alignment bracket of Fig. 17;
FIG. 21 is a rear plan view of the alignment bracket of Fig. 17;
FIG. 22 is a perspective view of the switch track segment of Fig. 12;
FIG. 23 is a partial perspective view of the switch track segment of Fig. 22 with the switch arm removed;
FIG. 24 is a top plan view of the pivot for the switch arm of the switch track segment of Fig. 22; and
FIG. 25 is a partial sectional view of the pivot for the switch arm of the switch track segment of Fig. 22.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION

The various features and advantageous details of the subject matter disclosed herein are explained more fully with reference to the non-limiting embodiments described in detail in the following description.

The subject matter disclosed herein describes an independent cart system suitable for use in a cleanroom environment. According to one aspect of the invention, the independent cart system reduces vibration between the vehicle and the track as the vehicle travels along the track. As will be discussed in more detail below, vibration is reduced by a number of factors, including but not limited to, improved alignment between adjacent track segments and dampening elements provided on the mover to absorb at least a portion of the forces experienced by the mover which would tend to induce vibration. According to another aspect of the invention, rolling surfaces are provided on the mover and on track segments to reduce wear surfaces present on the independent cart system. Reduced wear surfaces reduce particulate generated by the movers as the mover travels along the track. The reduction in particulate generation improves the classification of clean room in which the mover may be utilized. According to still another aspect of the invention, the vehicles and track segments are configured to contain particulate in locations where it may be generated to reduce the amount of particulate matter entering the ambient environment.

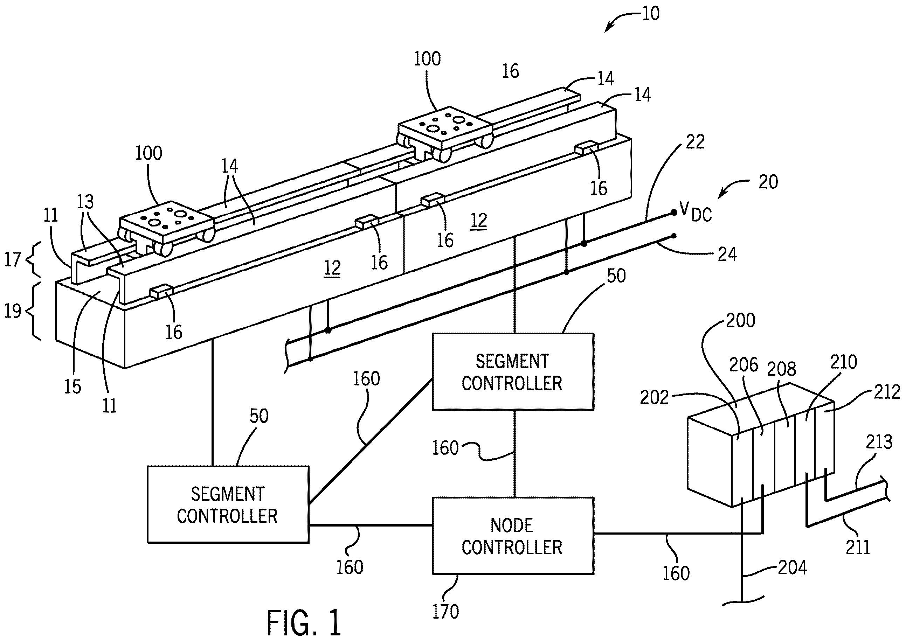

Turning initially to Fig. 1, an exemplary transport system for moving articles or products includes a track 10 made up of multiple segments 12. According to the illustrated embodiment, multiple segments 12 are joined end-to-end to define the overall track configuration. The illustrated segments 12 are both straight segments having generally the same length. It is understood that track segments of various sizes, lengths, and shapes may be connected together to form the track 10 without deviating from the scope of the invention. The track 10 is illustrated in a horizontal plane. For convenience, the horizontal orientation of the track 10 shown in Fig. 1 will be discussed herein. Terms such as upper, lower, inner, and outer will be used with respect to the illustrated track orientation. These terms are relational with respect to the illustrated track and are not intended to be limiting. It is understood that the track may be installed in different orientations, such as sloped or vertical, and include different shaped segments including, but not limited to, straight segments, inward bends, outward bends, up slopes, down slopes, right-hand switches, left-hand switches, and various combinations thereof. The width of the track 10 may be greater in either the horizontal or vertical direction according to application requirements. The movers 100 will travel along the track and take various orientations according to the configuration of the track 10 and the relationships discussed herein may vary accordingly.

According to the illustrated embodiment, the track receives power from a distributed DC voltage. A DC bus 20 receives a DC voltage, VDC, from a DC supply and conducts the DC voltage to each track segment 12. The illustrated DC bus 20 includes two voltage rails 22, 24 across which the DC voltage is present. The DC supply may include, for example, a rectifier front end configured to receive a single or multi-phase AC voltage at an input and to convert the AC voltage to the DC voltage. It is contemplated that the rectifier section may be passive, including a diode bridge or, active, including, for example, transistors, thyristors, silicon-controlled rectifiers, or other controlled solid-state devices. Although illustrated external to the track segment 12, it is contemplated that the DC bus 20 would extend within the lower portion 19 of the track segment. Each track segment 12 includes connectors to which either the DC supply or another track segment may be connected such that the DC bus 20 may extend for the length of the track 10. Optionally, each track segment 12 may be configured to include a rectifier section (not shown) and receive an AC voltage input. The rectifier section in each track segment 12 may convert the AC voltage to a DC voltage utilized by the corresponding track segment.

Each track segment 12 includes an upper portion 17 and a lower portion 19. The upper portion 17 is configured to carry the movers 100 and the lower portion 19 is configured to house the control elements. As illustrated, the upper portion 17 includes a pair of rails 14 extending longitudinally along the upper portion 17 of each track segment 12 and defining a channel 15 between the two rails. Clamps 16 affix to the sides of the rails 14 and secure the rails 14 to the lower portion 19 of the track segment 12. Each rail 14 is generally L-shaped with a side segment 11 extending in a generally orthogonal direction upward from the lower portion 19 of the track segment 12, and a top segment 13 extending inward toward the opposite rail 14. The top segment 13 extends generally parallel to the lower portion 19 of the track segment 12 and generally orthogonal to the side segment 11 of the rail 14. Each top segment 13 extends toward the opposite rail 14 for only a portion of the distance between rails 14, leaving a gap between the two rails 14. The gap and the channel 15 between rails 14 define a guideway along which the movers 100 travel.

According to one embodiment, the surfaces of the rails 14 and of the channel 15 are planar surfaces along which wheels 255, 260, 265 from the mover 100 travel. The surfaces of the rails 14 and channel 15 may be made of a long-wearing, rigid material to provide low wear for the wheels 255, 260, 265 of the mover 100. The wheels 255, 260, 265 are similarly made of a long-wearing, low-wear material such that the contacting surfaces between the movers 100 and the track segment 12 generate little particulate matter as the mover 100 travels along the track 10. According to one aspect of the invention, the wheels 255, 260, 265 may be manufactured of a polyurethane or a polyamide material to provide both long wear and vibration dampening properties for the mover 100. Various other combinations of shapes and materials for construction of the track segment 12 and mover 100 may be utilized without deviating from the scope of the invention.

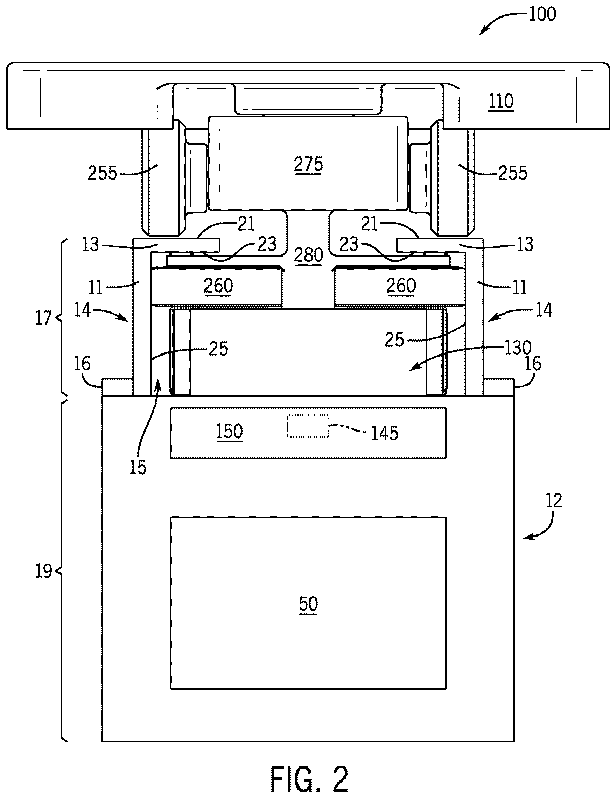

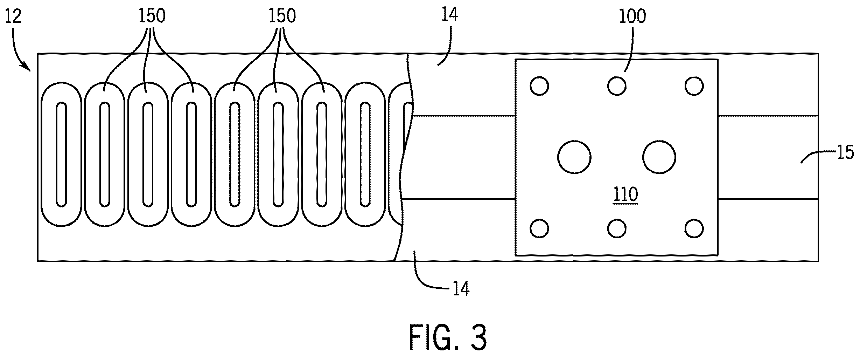

The mover 100 is carried along the track 10 by a linear drive system. The linear drive system is incorporated in part on each mover 100 and in part within each track segment 12. A first portion of the linear drive system includes one or more drive magnets 130 mounted to each mover 100. With reference to Fig. 2, the drive magnets 130 are arranged in a block on the lower surface of each mover. The linear drive system further includes a series of coils 150 spaced along the length of the track segment 12. With reference also to Fig 3, the coils 150 may be positioned within a housing for the lower portion 19 of the track segment 12 and below the surface of the channel 15. The coils 150 are energized sequentially according to the configuration of the drive magnets 130 present on the movers 100. The sequential energization of the coils 150 generates a moving electromagnetic field that interacts with the magnetic field of the drive magnets 130 to propel each mover 100 along the track segment 12.

A segment controller 50 is provided within each track segment 12 to control the linear drive system and to achieve the desired motion of each mover 100 along the track segment 12. The segment controller 50 for each track segment 12 regulates current in the coils 150 to generate an electromagnetic field. Further, the segment controller 50 selectively energizes coils 150 along a length of the track segment 12 to create a moving electromagnetic field. This moving electromagnetic field interacts with the magnetic field generated by the drive magnets 130 on each mover 100 to cause the movers 100 to travel along the track segment. Regulating the current such that the electromagnetic field moves along the track segment 12 in a first direction causes the mover 100 to travel in the first direction, and regulating the current such that the electromagnetic field moves along the track segment 12 in the opposite direction causes the mover 100 to travel in the opposite direction.

Although illustrated in Fig. 1 as blocks external to the track segments 12, the arrangement is to facilitate illustration of interconnects between controllers. As shown in Fig. 2, it is contemplated that each segment controller 50 may be mounted in the lower portion 19 of the track segment 12. Each segment controller 50 is in communication with a node controller 170 which is, in turn, in communication with an industrial controller 200. The industrial controller may be, for example, a programmable logic controller (PLC) configured to control elements of a process line stationed along the track 10. The process line may be configured, for example, to fill and label boxes, bottles, or other containers loaded onto or held by the movers 100 as they travel along the line. In other embodiments, robotic assembly stations may perform various assembly and/or machining tasks on workpieces carried along by the movers 100. The exemplary industrial controller 200 includes: a power supply 202 with a power cable 204 connected, for example, to a utility power supply; a communication module 206 connected by a network medium 160 to the node controller 170; a processor module 208; an input module 210 receiving input signals 211 from sensors or other devices along the process line; and an output module 212 transmitting control signals 213 to controlled devices, actuators, and the like along the process line. The processor module 208 may identify when a mover 100 is required at a particular location and may monitor sensors, such as proximity sensors, position switches, or the like to verify that the mover 100 is at a desired location. The processor module 208 transmits the desired locations of each mover 100 to a node controller 170 where the node controller 170 operates to generate commands for each segment controller 50.

A position feedback system provides knowledge of the location of each mover 100 along the length of the track segment 12 to the segment controller 50. According to one embodiment of the invention, the position feedback system includes one or more position magnets mounted to the mover 100. According to another embodiment of the invention, the position feedback system utilizes the drive magnets 130 as position magnets. Position sensors 145 are positioned along the track segment 12 at a location suitable to detect the magnetic field generated by the drive magnets 130. According to the illustrated embodiment, the position sensors 145 are located below or interspersed with the coils 150. The sensors 145 are positioned such that each of the drive magnets 130 are proximate to the sensor as the mover 100 passes each sensor 145. The sensors 145 are a suitable magnetic field detector including, for example, a Hall Effect sensor, a magneto-diode, an anisotropic magnetoresistive (AMR) device, a giant magnetoresistive (GMR) device, a tunnel magnetoresistance (TMR) device, fluxgate sensor, or other microelectromechanical (MEMS) device configured to generate an electrical signal corresponding to the presence of a magnetic field. The magnetic field sensor 145 outputs a feedback signal provided to the segment controller 50 for the corresponding track segment 12 on which the sensor 145 is mounted. The position sensors 145 are spaced apart along the length of the track. According to one aspect of the invention, the position sensors 145 are spaced apart such that adjacent position sensors 145 generate a feedback signal which is offset from each other by ninety electrical degrees (90°). Multiple position sensors 145 are, therefore, generating feedback signals in tandem for a single mover 100 as the mover is travelling along the track 10.

Each controller (i.e., the segment controller 50, the node controller 170, and the programmable logic controller 200) includes at least one processor and non-transitory memory. The non-transitory memory stores instructions for execution by the processor within the controller. It is contemplated that the processor and non-transitory memory may each be a single electronic device or formed from multiple devices. The processor may be a microprocessor. Optionally, the processor and/or the non-transitory memory may be integrated on a field programmable gate array (FPGA) or an application specific integrated circuit (ASIC). The instructions include one or modules, control programs, and/or an operating system to achieve the desired functions of the corresponding controller. Although certain features of the present invention are discussed herein as being performed by specific controllers, in alternate embodiments, some features may be performed by another controller within the system.

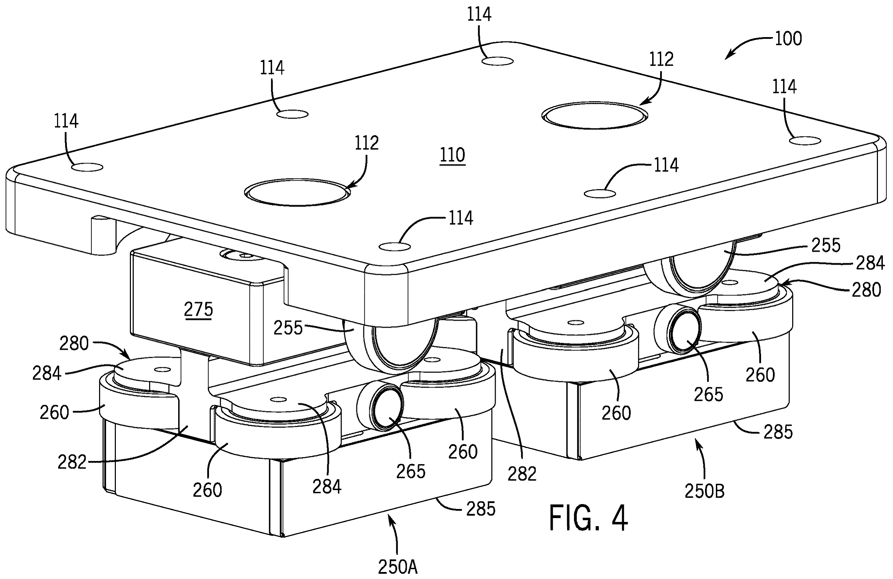

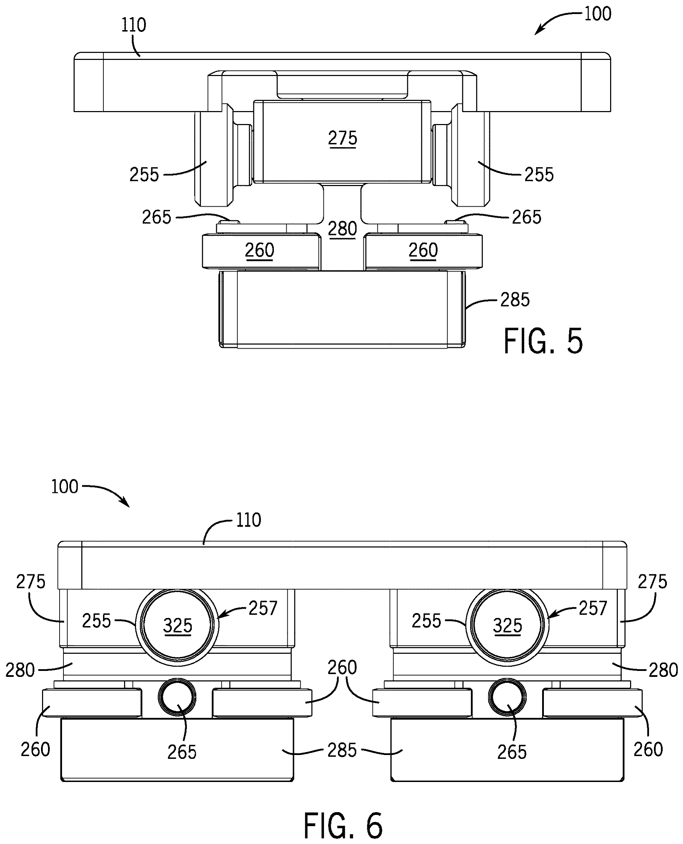

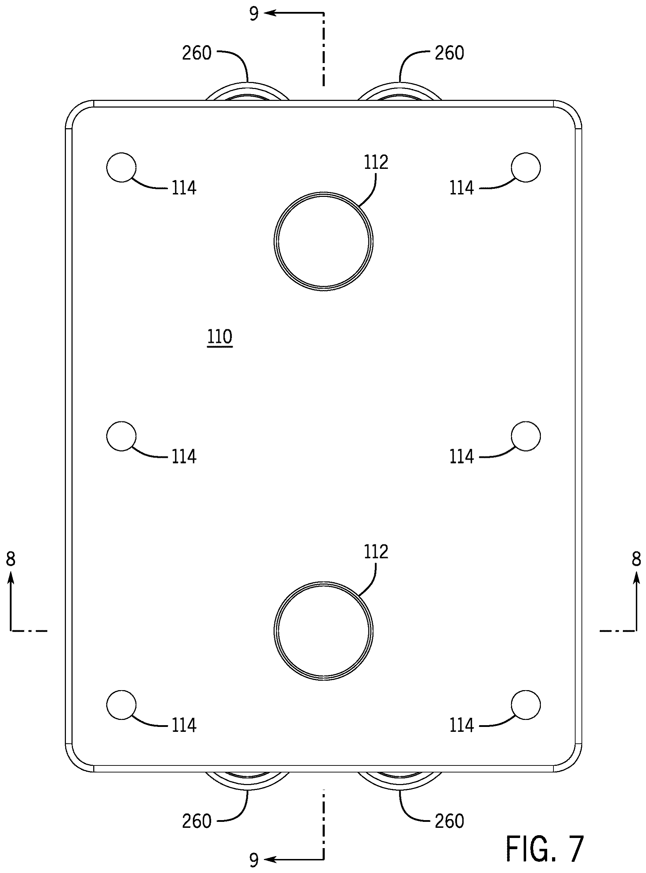

Turning next to Figs. 4-7, one embodiment of a mover 100 configured for operation in a cleanroom environment is illustrated. The illustrated mover 100 is a tandem mover. The tandem mover includes two drive blocks 250, where the first drive block 250A and the second drive block 250B are both coupled to a single platform 110. Each drive block 250 includes a set of drive magnets 130 in the base 285 of the drive block which interact with the drive coils 150 in the track segments 12 to propel the mover 100 along the track 10. A first pair of openings 112 are provided through the platform 110 for securing the platform 110 to each drive block 250. A second set of openings 114 are provided in the top of each platform 110 for mounting fixtures, clamps, or other mechanical devices for carrying or securing payload to the platform 110 as the mover 100 travels along the track 10. The illustrated embodiment is not intended to be limiting. A single drive block 250 may have a platform 110 attached to the drive block. Similarly, a single platform 110 may be connected to three or more drive blocks 250. The size of the platform 110 is determined according to the application requirements and the payload being transported by the mover 100. The number of drive blocks 250 mounted to the platform 110 are a function of the size of the platform 110 and of the weight of the payload being transported by the mover 100. As used herein, an object identified by a reference numeral without a subsequent letter, such as the drive block 250, refers to all such objects generally. The same object identified by a reference numeral with a subsequent letter, such as a first drive block 250A and a second drive block 250B, refers to specific instances of the object.

The illustrated mover 100 includes multiple sets of wheels 255, 260, 265 configured to engage the rails 14 on each track segment 12 to carry the mover 100 along the track 10. A first set of wheels 255 are mounted on each side of a pivot block 275 on the top portion of each mover 100. The first set of wheels 255 for each drive block 250 ride along an upper surface 21 of the top segment 13 of each rail 14. A second set of wheels 260 are mounted to a t-frame member 280 on each mover 100. The t-frame member 280 is mounted below the pivot block 275 and includes a central frame portion 282 and a pair of side frame portions 284 extending from each side of the central frame portion 282. Each of the wheels 260 in the second set of wheels is mounted to a lower surface of one of the side frame portions 284 and is configured to ride along an interior surface 25 of the side segment 11 of each rail 14. A third set of wheels 265 is also mounted to the t-frame member 280 on each mover 100. Each wheel 265 in the third set is mounted to the lower portion of the central frame portion 282 below the side frame portions 284. Each side frame portion 284 includes a notch such that the wheels 265 in the third set, while mounting below the side frame portion, may extend upward beyond the side frame portion. Each of the wheels 265 in the third set of wheels acts as an up-stop wheel for the mover 100 and rides along a lower surface 23 of the top segment 13 of each rail 14. The third set of wheels 265 are optionally provided according to an application's requirements. The mover 100 travels according to a function of a number of variables including, but not limited to, a weight of payload present, a type of payload present (e.g., liquid, solid, fragility, etc.), a maximum speed, a maximum acceleration, or interaction with external actuators or stations. In some applications, the rate of travel, curvature of the track 10, and the like limit the speed of the mover 100 such that an up-stop wheel 265 is not required. In other applications, the rate of travel, curvature of the track, and the like may otherwise cause the mover 100 to begin tipping toward one side or the other and the up-stop wheels 265 are desired.

In prior independent cart systems, contacting surfaces between a mover 100 and the track 10 were sliding surfaces. Surfaces of the rails 14 and contacting surfaces of the movers 100 were planar and selected as a low friction material along which movers 100 slid. The surfaces may be, for example, nylon, Teflon^{®}, aluminum, stainless steel and the like, where the hardness of the surfaces on the track segment 12 are greater than the contacting surface of the movers 100 such that the contacting surfaces of the movers 100 wear faster than the surface of the track segment 12. The contacting surfaces of the movers 100 were removably mounted to the mover 100 such that they may be replaced if the wear exceeds a predefined amount. This wear, however, generated undesirable particulate matter. Thus, providing wheels 255, 260, 265 at each contacting surface of the mover 100 to the rails 14 eliminates the sliding contact between the mover 100 and the rails 14. While some wear is generated by the rolling contact of wheels 255, 260, 265 to the rails 14, the particulate generation is significantly less than that generated by sliding contact.

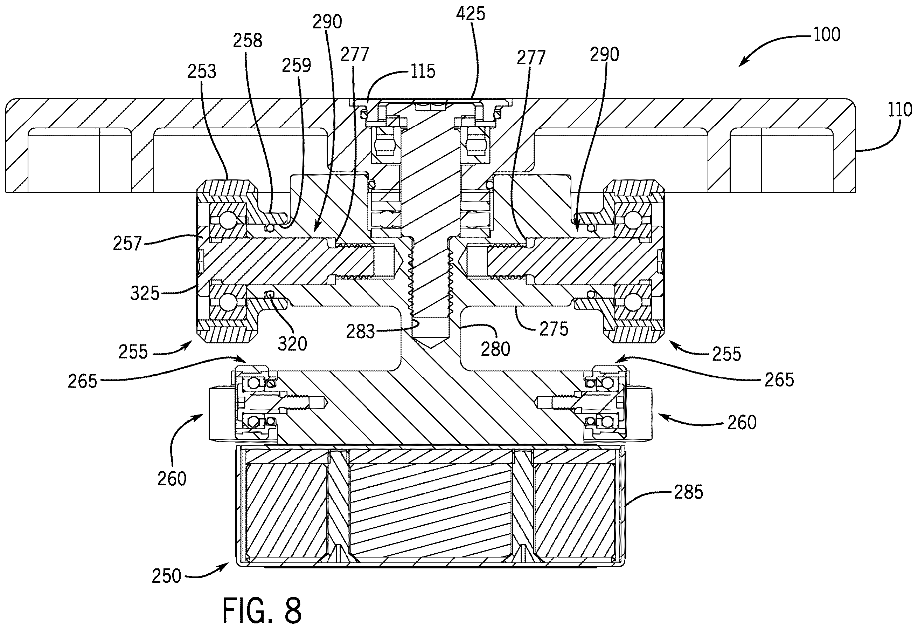

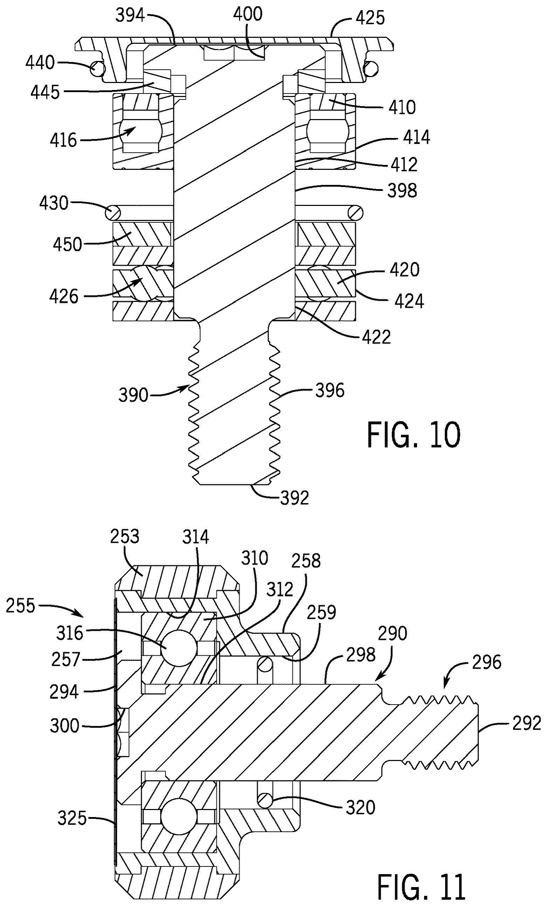

With reference also to Figs. 8 and 11, each wheel 255 is mounted on one side of the pivot block 275 via a fastener 290 extending through the center of the wheel and acting as an axle for the wheel 255. The fastener 290 includes a first end 292 and a second end 294, opposite the first end. The first end 292 is inserted through the wheel 255 and into an aperture 277 on the pivot block 275. A first portion 296 of the fastener 290 extending from the first end 292 for a portion of the length of the fastener 290 is threaded. The threaded portion 296 of the fastener 290 engages a complementary threaded portion of the aperture 277 in the pivot block 275 to secure the fastener 290 and the wheel 255 to the pivot block. A recess 300 in the second end 294 of the fastener is configured to receive a tool, where the recess 300 may be a slot for a flat-head screwdriver, a cross-shape for a Philip's-head screwdriver, hexagonal for an Allen wrench, star-shaped for a torx driver, or any other suitable shape to receive a complementary-shaped tool. During manufacture, the tool is utilized to securely insert the threaded portion 296 of the fastener within the threaded portion of the aperture 277.

The fastener 290 further includes a cylindrical portion 298 extending for a portion of the distance between the threaded portion 296 and the second end 294 of the fastener. The cylindrical portion 298 serves as the axle for the wheel 255 through which the fastener extends. A rolling bearing 310 serves as a hub the wheel 255 providing rotational movement of the wheel 255 about the axle. An inner periphery 312 of an inner ring for the rolling bearing 310 is seated on the cylindrical portion 298 of the fastener, and an outer periphery 314 of an outer ring for the rolling bearing 310 is seated against the wheel 255. According to the illustrated embodiment, the rolling bearing 310 includes ball bearings 316 between the inner and outer rings. Optionally, the rolling bearing 310 may include rollers, where either the ball bearings 316 or the rollers permit rotation of the outer ring with respect to the inner ring.

When the fastener 290 has securely mounted the wheel 255 to the pivot block 275, the second end 294 of the fastener 290 is located within a recess 257 on the outer surface of the wheel 255. Although the rolling bearing 310 will generate less particulate than a solid surface bearing, some particulate will still be generated. To further reduce the particulate generated by the mover 100, a cap 325 is mounted over the recess 257 on the outer surface of the wheel 255. As a result particulate generated by the rolling bearing 310 and released toward the outer surface of the wheel 255 is contained within the recess 257 at the outer surface of the wheel.

The wheel 255 further includes a shaft portion 258 extending inward from the wheel along at least a portion of the cylindrical portion 298 of the fastener 290. The shaft portion 258 includes a central opening 259 extending therethrough to receive the cylindrical portion 298 of the fastener 290. The shaft portion 258 of the wheel 255 rotates with the wheel about the cylindrical portion 298 of the fastener 290. As previously indicated, it is preferred to utilize a rolling bearing 310 rather than a solid bearing around the cylindrical portion 298 of the fastener to reduce particulate generation. As a result, the opening 259 through the shaft portion 258 has a diameter greater than the diameter of the cylindrical portion 298. Under normal operation, the shaft portion 258 of the wheel 255 will not contact the cylindrical portion 298 of the fastener 290.

According to another aspect of the invention, an o-ring 320 may be provided within the opening 259 of the shaft portion 258. A channel may be provided within the opening 259 defining a seat for the o-ring 320. The diameter of the o-ring may be selected to be equal to the gap between the shaft portion 258 of the wheel 255 and the cylindrical portion 298 of the fastener 290. The o-ring provides a seal between the rolling bearing 310 and an interior surface of the wheel 255. Only a thin sectional portion of the o-ring 320 contacts the fastener 290, thereby minimizing the surface wear of the o-ring. Further, the o-ring 320 may be made of a long-wearing material to minimize particulate generation from the o-ring. The o-ring 320 may be, for example, made from a fluoroelastomer or a nitrile rubber. Thus, the o-ring 320 contains particulate generated by the rolling bearing 310 while minimizing and additional particulate generated by the o-ring.

According to still another aspect of the invention, at least one dampening element may be provided on each wheel 255 to reduce vibration of the mover 100 as the mover 100 travels along the track 10. A dampening element is used to absorb at least a portion of the forces experienced by the mover 100 as the mover travels along the track without translating those forces to the body of the mover, thereby reducing vibration experienced on the mover. Reduced vibration, in turn, reduces particulate generated from the contacting surfaces on the mover 100. One dampening element that may be included on each wheel 255 is the tire 253 of the wheel. The tire 253 may be manufactured of a polyurethane or a polyamide material. The polyurethane provides a long-wearing surface such that little particulate matter is generated as the wheel 255 travels along the track. The hardness of the wheels may be in a range from about shore A 50 to shore D 90. Additionally, the polyurethane material absorbs at least a portion of the forces experienced by the wheels 255 as they, for example, travel over bumps or gaps along the track 10. Thus, the polyurethane tire 253 is able to reduce vibration experienced by the mover 100 travelling along the track 10.

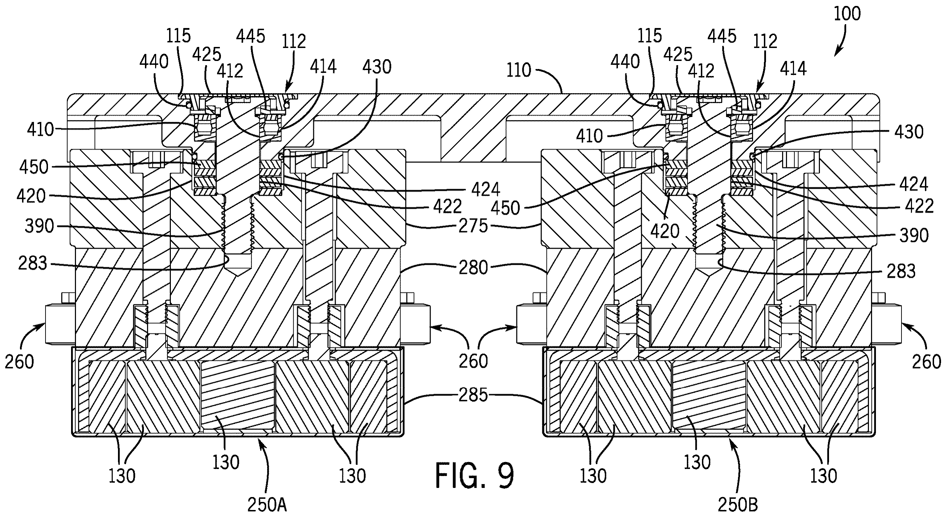

Turning next to Figs. 9 and 10, a fastener 390 is inserted through each opening 112 to secure the platform 110 to each drive block 250. The fastener 390 includes a first end 392 and a second end 394, opposite the first end. The first end 392 is inserted through the platform 110 and into an aperture 283 extending through the pivot block 275 and into the t-frame member 280. A first portion 396 of the fastener 390 extending from the first end 392 for a portion of the length of the fastener 390 is threaded. The threaded portion 396 of the fastener 390 engages a complementary threaded portion of the aperture 283 in the t-frame member 280 to secure the fastener 390 and the platform 110 to the t-frame member. A recess 400 in the second end 394 of the fastener is configured to receive a tool, where the recess 400 may be a slot for a flat-head screwdriver, a cross-shape for a Philip's-head screwdriver, hexagonal for an Allen wrench, star-shaped for a torx driver, or any other suitable shape to receive a complementary-shaped tool. During manufacture, the tool is utilized to securely insert the threaded portion 396 of the fastener within the threaded portion of the aperture 283.

The fastener 390 further includes a cylindrical portion 398 extending for a portion of the distance between the threaded portion 396 and the second end 394 of the fastener. The cylindrical portion 398 serves as a pivot pin about which the platform 110, drive block 250 or a combination thereof may rotate. A first rolling bearing 410 is provided between the fastener 390 and the platform 110 to permit rotational movement of the platform 110 around the fastener 390. The first rolling bearing 410 includes an inner periphery 412 of an inner ring for the rolling bearing 410 seated on the cylindrical portion 398 of the fastener, and an outer periphery 414 of an outer ring for the rolling bearing 410 is seated against the interior of the opening 112 in the platform 110. According to the illustrated embodiment, the rolling bearing 410 includes ball bearings 416 between the inner and outer rings. Optionally, the rolling bearing 410 may include rollers, where either the ball bearings 416 or the rollers permit rotation of the outer ring with respect to the inner ring.

A second rolling bearing 420 is provided between the fastener 390 and the drive block 250 to permit rotational movement of the drive block 250 around the fastener 390. The second rolling bearing 420 includes an inner periphery 422 of an inner ring for the rolling bearing 420 seated on the cylindrical portion 398 of the fastener, and an outer periphery 424 of an outer ring for the rolling bearing 420 is seated against the interior of the opening 112 in the t-frame member 280. According to the illustrated embodiment, the rolling bearing 420 includes ball bearings 426 between the inner and outer rings. Optionally, the rolling bearing 420 may include rollers, where either the ball bearings 426 or the rollers permit rotation of the outer ring with respect to the inner ring.

When the fastener 390 has securely mounted the platform 110 to the drive block 250, the second end 394 of the fastener 390 is located within a recess 115 on the upper surface of the platform 110. Although the rolling bearing 410, 420 will generate less particulate than a solid surface bearing, some particulate will still be generated. To further reduce the particulate generated by the mover 100, a cap 425 is mounted over the recess 115 on the upper surface of the platform 110. As a result particulate generated by the rolling bearings 410, 420 and released toward the upper surface of the platform 110 is contained within the opening 112 in the platform 110.

Because the platform 110 is able to pivot with respect to the drive block 125, it is also desirable to have a gap between the platform 110 and drive block 125 such that the two surfaces do not rub against each other during rotation. An o-ring 430 may be provided within the opening in the t-frame member 280. A channel may be provided within the opening defining a seat for the o-ring 430. The diameter of the o-ring may be selected to be equal to a gap between the inner periphery of the opening in the t-frame member 280 and the cylindrical portion 398 of the fastener 390. The o-ring provides a seal between the second rolling bearing 429 and the gap between the drive block 250 and the platform 110 where particulate could otherwise escape from the mover 100. Only a thin sectional portion of the o-ring 430 contacts the fastener 390, thereby minimizing the surface wear of the o-ring. Further, the o-ring 430 may be made of a long-wearing material to minimize particulate generation from the o-ring. The o-ring 430 may be, for example, made from a fluoroelastomer or a nitrile rubber. Thus, the o-ring 430 contains particulate generated by the second rolling bearing 420 while minimizing and additional particulate generated by the o-ring. Optionally, still other sealing members may be provided along the length of the fastener 390 as desired to reduce particulate generated by the mover 100 entering the ambient environment in which the mover is operating. According to the illustrated embodiment, a second o-ring 440 is provided around the cap 425 mounted over the recess 115 on the upper surface of the platform 110. A channel is provided in the outer periphery of a side of the cap 425 defining a seat for the second o-ring 440. The diameter of the second o-ring may be selected to be slightly greater than a gap between the outer periphery of the side of the cap 425 and an inner periphery of the opening 112 in the platform 110. As a result, when the cap 425 and o-ring are inserted into the opening 112, the o-ring may be compressed to fully fill the gap and to prevent particulate from the rolling bearing 410 escaping from the mover 100.

According to another aspect of the invention, one or more dampening elements are provided with the fastener 390 to reduce vibration on the mover 100. A first dampening element 445 is illustrated between a head of the fastener 390 and the first rolling bearing 410. The dampening element 445 may be annular. Optionally, the first dampening element 445 may have other shapes with a circular opening extending through the center to receive the fastener 390. The first dampening element 445 absorbs forces between the head of the fastener 390 and the first bearing 410. The first dampening element 445 may be made from a thermoplastic vulcanizate (TPV), a polyurethane material, or a silicone material. The first dampening element 445 preferably includes some elastomeric properties to temporarily deform and absorb some forces experienced by the mover 100 and then return to its original shape. The force absorption reduces vibration experienced by the mover 100. The first bearing 410 is fit between the fastener 390 and the platform 110. As a result, the first dampening element 445 experiences forces generated by a payload present on the platform 110 or from the platform itself. As the payload and/or platform 110 are carried by the drive block 250, bumps from gaps or misalignment between track segments 12, debris on the track or rail, or other external influences may cause the payload and/or platform to experience forces. The first dampening element 445 may reduce these forces and, thereby, reduce potential vibration and subsequent wear experienced by the mover 100.

A second dampening element 450 is illustrated around the fastener 390 and between the walls of the opening in the pivot block 275 in which the fastener 390 is inserted. The second dampening element 450 may be annular. Optionally, the second dampening element 450 may have other shapes with a circular opening extending through the center to receive the fastener 390. The outer periphery of the second dampening element 450 is complementary to the shape of the opening in which it is inserted. The second dampening element 450 absorbs forces between the fastener 390 and the side walls of the opening in the drive block 250. The fastener 390 secures the platform 110 to the drive block 250. As a result, the second dampening element 450 experiences forces lateral forces on the fastener 390 which may be generated by a payload present on the platform 110 or from the platform itself. As the payload and/or platform 110 are carried by the drive block 250 centrifugal forces from curves, bumps from gaps or misalignment between track segments 12, debris on the track or rail, or other external influences may cause the payload and/or platform to experience lateral forces. The second dampening element 450 may reduce these forces and, thereby, reduce potential vibration and subsequent wear experienced by the mover 100.

In operation, the linear drive system, as described above, is controlled to drive each mover 100 around the track 10. The series of coils 150 spaced along the length of the track segment 12 are energized sequentially according to the configuration of the drive magnets 130 present on the movers 100. The sequential energization of the coils 150 generates a moving electromagnetic field that interacts with the magnetic field of the drive magnets 130 to propel each mover 100 along the track segment 12.

As each mover 100 travels along the track 10, contact between moving surfaces may cause wear and may release particulate matter into the ambient environment. Thus far, various features of the movers 100 have been discussed which may reduce sliding contact between surfaces, reduce forces experienced by the mover 100 to, in turn, reduce the amount of wear experienced by the mover, and additional features which may contain particulate that is still generated despite the measures taken to reduce the overall amount of particulate generated.

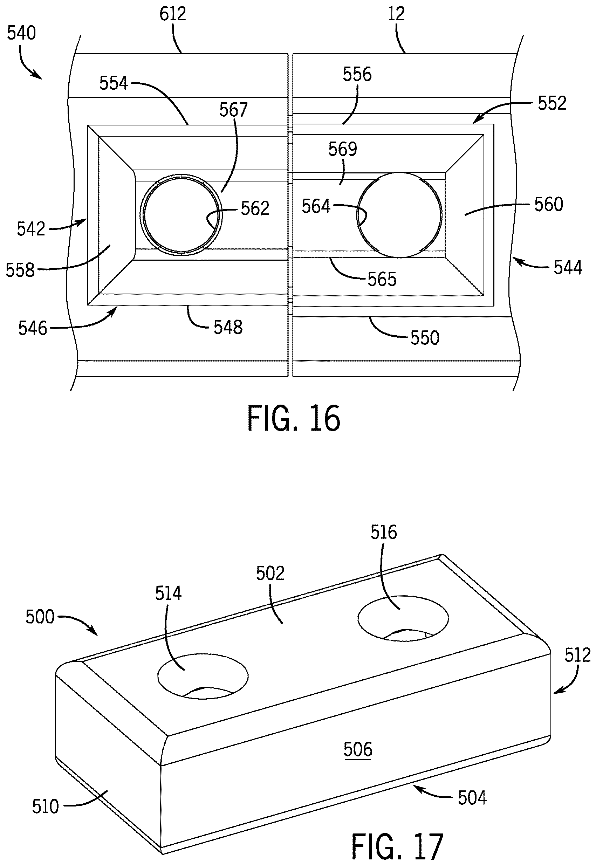

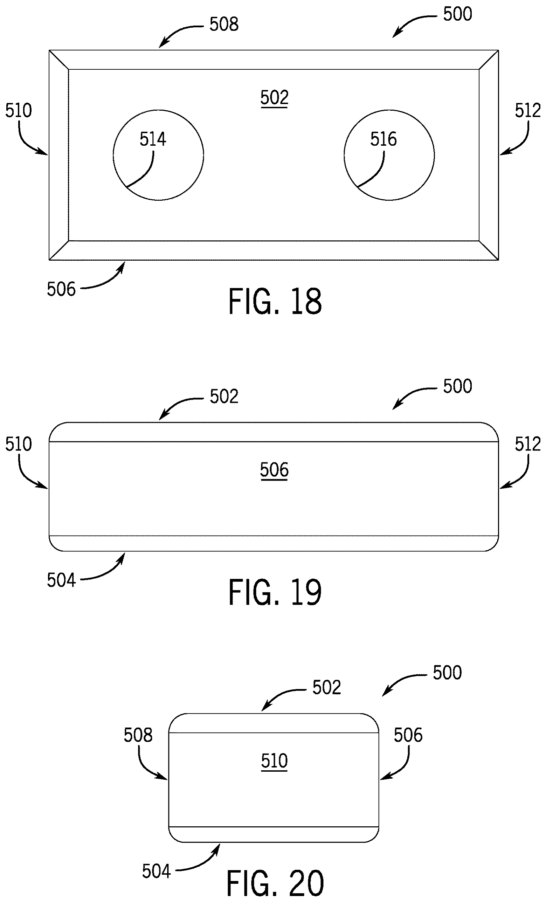

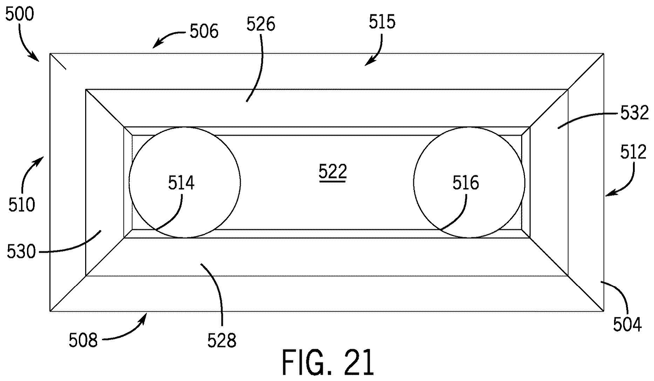

According to still another feature of the invention, improvements to the track 10 may also reduce forces experienced by the mover 100 to, in turn, reduce the amount of wear experienced by the mover. Turning next to Figs. 17-21, an alignment bracket 500 may be provided to improve alignment and to reduce gaps between adjacent track segments. The improved alignment and reduced gaps reduce disturbance forces experienced by the mover 100 as a mover 100 transitions between track segments.

The illustrated alignment bracket 500 has a generally rectangular exterior in each of the three dimensions. The alignment bracket 500 has a front surface 502 and a rear surface 504 opposite the front surface. The alignment bracket 500 includes a first side surface 506 and a second side surface 508 opposite the first side surface. Each of the first and second side surfaces 506, 508 extend between the front surface 502 and the rear surface 504. The alignment bracket 500 further includes a first end 510 and a second end 512 opposite the first end. Each of the first and second ends 510, 512 extend between the front surface 502 and the rear surface 504 as well as extending between the first and second side surfaces 506, 508. The front surface 502 includes a first opening 514 and a second opening 516 through which a fastener may be inserted. The front surface 502, the first side surface 506, the second side surface 508, the first end 510, and the second end 512 are each generally planar surfaces defining the outer surface of the alignment bracket. The rear surface 504 is defined by a periphery corresponding to a lower edge of each of the first side surface 506, the second side surface 508, the first end 510, and the second end 512. The remainder of the rear surface 504 is open to an interior volume 515 within the alignment bracket 500.

The interior volume 515 of the alignment bracket 500 is defined by interior surfaces of the front surface 502, the first side surface 506, the second side surface 508, the first end 510, and the second end 512. Each interior surface is tapered inward as it extends from the rear surface 504 toward the front surface 502. The interior surface 526 of the first side surface 506 tapers inward from the rear edge to the interior surface 522 of the front surface 502, such that the edge of the interior surface 526 of the first side surface 506 meets the interior surface 522 of the front surface 502 along one side of each of the first and second openings 514, 516. The interior surface 528 of the second side surface 508 tapers inward from the rear edge to the interior surface 522 of the front surface 502, such that the edge of the interior surface 528 of the second side surface 508 meets the interior surface 522 of the front surface 502 along an opposite side of each of the first and second openings 514, 516 from where the first interior side surface 526 meets the interior front surface 522. The interior surface 530 of the first end surface 510 tapers inward from the rear edge to the interior surface 522 of the front surface 502, such that the edge of the interior surface 530 of the first end 510 meets the interior surface 522 of the front surface 502 along one end of the first opening 514. The interior surface 532 of the second end surface 512 tapers inward from the rear edge to the interior surface 522 of the front surface 502, such that the edge of the interior surface 532 of the second end 512 meets the interior surface 522 of the front surface 502 along one end of the second opening 516.

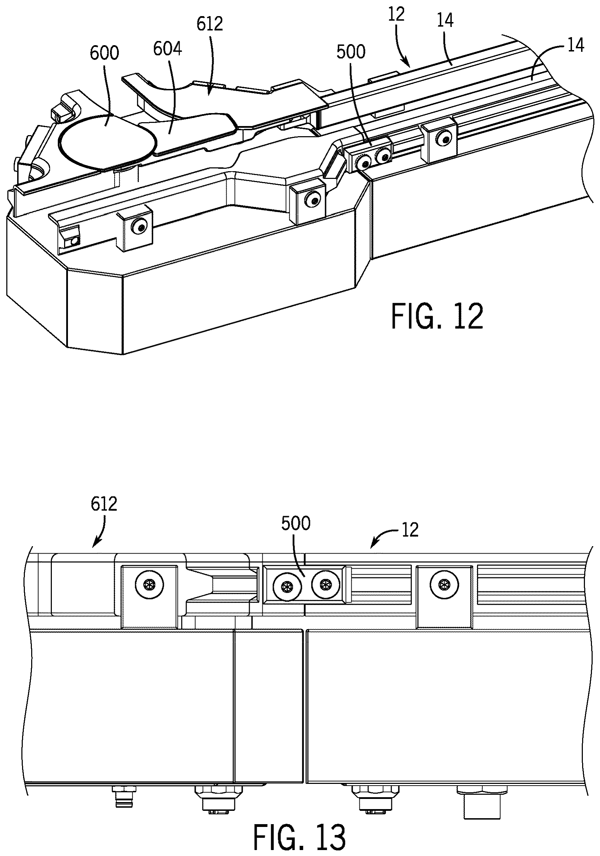

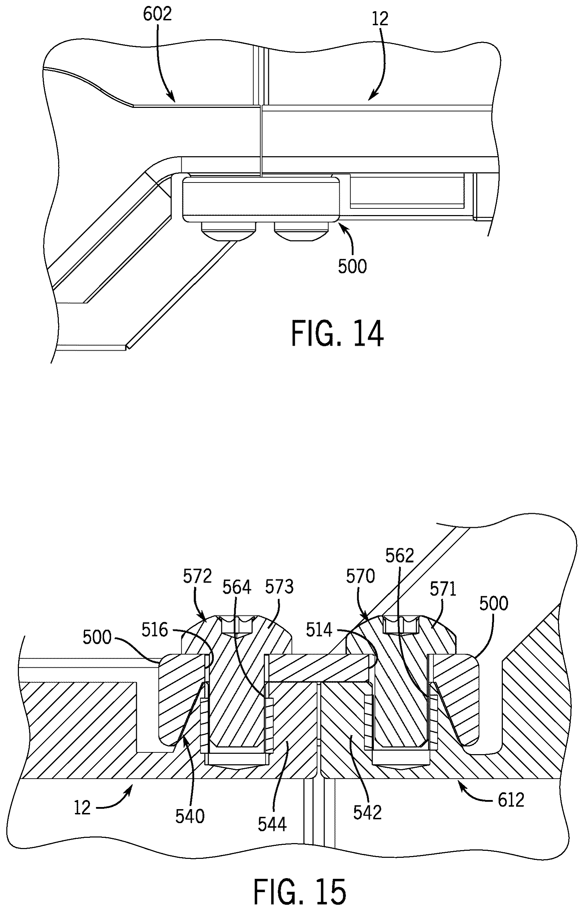

The combination of the tapered interior surfaces for each of the first side surface 506, the second side surface 508, the first end 510, and the second end 512 and the generally planar interior surface 522 for the front surface are utilized to align adjacent track segments in three dimensions. With reference next to Figs. 12-16, an alignment bracket 500 is illustrated aligning a straight track segment 12 with a switch track segment 612. As illustrated in Fig. 16, the straight track segment 12 and the switch track segment 612 each include one half of a second alignment bracket 540 integrally formed on the track segments. The second alignment bracket 540 is complementary to and receives the external alignment bracket 500 mounted onto the second alignment bracket. A first half 542 of the second alignment bracket 540 is formed on switch track segment 612, and a second half 544 of the second alignment bracket 540 is formed on the straight track segment 12. When the removable alignment bracket 500 is fit onto the second alignment bracket 540, the interior surface 526 of the first side surface 506 engages a first side surface 546 of the second alignment bracket 540. A first half 548 of the first side surface 546 is present on the switch track segment 612, and a second half 550 of the first side surface 546 is present on the straight track segment 12. Similarly, when the removable alignment bracket 500 is fit onto the second alignment bracket 540, the interior surface 528 of the second side surface 508 engages a second side surface 552 of the second alignment bracket 540. A first half 554 of the second side surface 552 is present on the switch track segment 612, and a second half 556 of the second side surface 552 is present on the straight track segment 12. The interior surface 530 of the first end 510 engages a first end surface 558 of the second alignment bracket 540, and the interior surface 532 of the second end 512 engages a second end surface 560 of the second alignment bracket 540. Each of the first side surface 546, the second side surface 552, the first end surface 558, and the second end surface 560 protrude outward from a corresponding side of either the switch track segment 612 or the straight track segment 12. The surfaces 546, 552, 558, and 560 are tapered at a complementary angle to the taper of the interior surfaces 526, 528, 530, 532 of the removable alignment bracket 500 and extend for the same distance such that the distal end of each surface defines an outer periphery of the distal surface 565 of the second alignment bracket 540. The distal surface 565 is generally planar and configured to engage the interior front surface 522 of the removable alignment bracket 500. A first half 567 of the distal surface 565 is present on the switch track segment 612, and a second half 569 of the distal surface 565 is present on the straight track segment 12.

The second alignment bracket 540 further includes a pair of openings 562, 564 which are complementary to the opening 514, 516 in the removable alignment bracket 500. The first opening 562 is present in the first half 567 of the distal surface 565 on the switch track segment 612, and the second opening 564 is present in the second half 569 of the distal surface 565 on the straight track segment 12. According to one aspect of the invention, the interior surface of the first opening 562 and of the second opening 564 are each threaded. A complementary threaded fastener 570, 572 such as a screw or bolt is inserted through the openings 514, 516 in the removable alignment bracket 500 and engage the threaded interior surfaces of the first and second openings 562, 564.

Assembling the removable alignment bracket 500 on to the second alignment bracket 540 helps align the channels 15 between rails 14 for adjacent track segments, such as the switch track segment 612 and the straight track segment 12, in three dimensions to reduce vibration on the mover 100 as the mover 100 transitions between adjacent track segments. With the tapered interior surfaces, the length of the periphery at the opening in the rear surface 504 of the removable alignment bracket 500 is greater than the length of the periphery of the interior surface 522 on the front surface 502. Consequently, the removable alignment bracket 500 may be moved from side-to-side or from end-to-end in order to align the openings 514, 516 in the removable alignment bracket 500 with the openings 562, 564 in the complementary alignment bracket 540 formed on the sides of the track segments 12. Further, the diameter of the openings 514, 516 in the removable alignment bracket 500 is greater than the diameter of the openings 562, 564 in the complementary alignment bracket 540 to permit some variation in initial positioning of the fasteners 570, 572 within the openings 514, 516. Once the openings 514, 516 in the removable alignment bracket 500 are aligned with the openings 562, 564 in the complementary alignment bracket 540, the threaded fasteners 570, 572 may be inserted through the openings 514, 516 in the removable alignment bracket 500 and an initial engagement with the openings 562, 564 in the complementary alignment bracket 540 is made by partially rotating the fasteners into the second alignment bracket 540.

After establishing the initial alignment between the two alignment brackets 500, 540, alignment of adjacent track segments 12 in three-dimensions is achieved by fully engaging the threaded fasteners 570, 572 with the openings 562, 564 in the complementary alignment bracket 540. Each of the fasteners 570, 572 is preferably alternately rotated such that the two fasteners 570, 572 are advanced at a similar rate. As the fasteners 570, 572 advance, a head 571, 573 of each fastener engages the front surface 502 of the removable alignment bracket 500. The head 571, 573 of each fastener 570, 572 causes the removable alignment bracket 500 to more fully engage the complementary alignment bracket 540 mounted on the adjacent track segments 12. As the removable alignment bracket 500 engages the complementary alignment bracket 540, the tapered interior surfaces 526, 528, 530, 532 of the removable alignment bracket 500 engage the tapered surfaces 546, 552, 558, 560 of the second alignment bracket 540. The interior surface 526 of the first side 506 will cause the first half 548 and the second half 550 of the first side surface 546 to draw into alignment with each other. Similarly, the interior surface 528 of the second side 508 will cause the first half 554 and the second half 556 of the second side surface 5552 to draw into alignment with each other. The first and second side surfaces 506, 508 create alignment between adjacent track segments in a first dimension. The interior surface 530 of the first end 510 for the removable alignment bracket 500 engages the tapered surface of the first end 558 of the second alignment bracket 540, and the interior surface 532 of the second end 520 for the removable alignment bracket 500 engages the tapered surface of the second end 560 of the second alignment bracket 540. Engagement between ends of the alignment brackets, draws the first half 542 and the second half 544 of the second alignment bracket 540 toward each other, aligning the adjacent track segments in a second dimension. When the fasteners 570, 572 are fully advanced into the openings 562, 564 of the second alignment bracket 540, the interior surface 522 of the front 502 of the removable alignment bracket 500 engages the distal surface 565 of the second alignment bracket 540. Fully engaging the fasteners 570, 572 will draw the first half 567 of the distal surface 565 and the second half 569 of the distal surface against the interior surface 522 of the front 502 of the removable alignment bracket 500, aligning the adjacent track segments in a third dimension. By utilizing the complementary alignment brackets 500, 540 adjacent track segments 12 are better aligned with each other, reducing variation in the alignment of the channels 15 and rails 14 between adjacent track segments, providing a smoother surface over which the movers 100 travel, and reducing vibration in the mover 100 as the mover travels along the track 10.

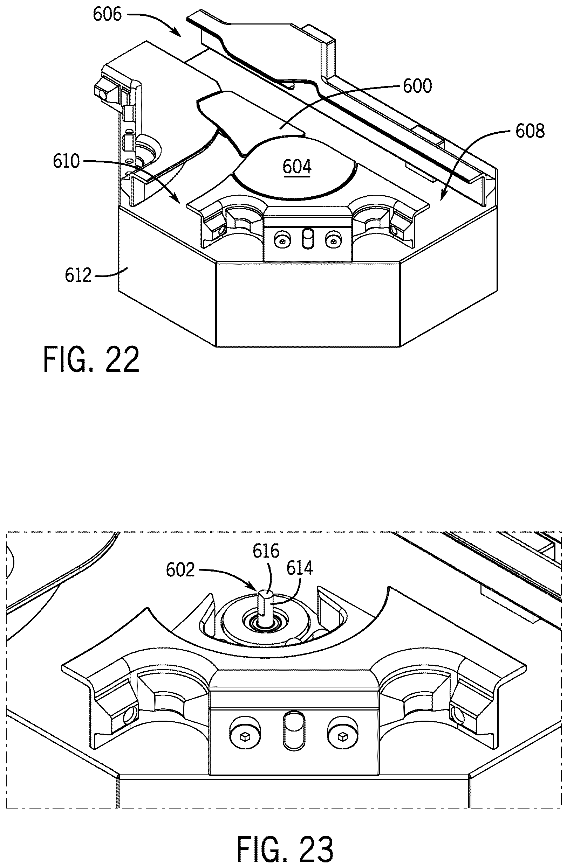

According to still another feature of the invention, a pivot 602 for a switch arm 600 is provided which reduces vibration on the switch arm 600 as well as reducing particulate generated at the switch track segment 612. Turning next to Figs. 22-25, the switch arm 600 includes an arm mechanism 604 mounted on the pivot 602. With the switch arm 600 in a first position, as illustrated in Fig. 22, a mover 100 traveling along the track 10 will continue along a straight path between two other track segments 12 mounted at a first track connection 606 and a second track connection 608 for the switch track segment 612. With the switch arm 600 in a second position (not shown), the mover 100 will be directed between track segments 12 mounted at the first track connection 606 and a third track connection 610.

The segment controller 50 within the switch track segment 612 is configured to control operation of the switch arm 600 as a function of the mover 100 approaching and/or present on the switch track segment 612 to selectively move between the first position and the second position. A motor, or other actuator, (not shown) within the switch track segment 612 is connected to a first end 616 of a pivot rod 614. The motor, or other actuator, applies a radial force at or proximate to a second end of the pivot rod 614, causing the pivot rod to rotate between the first position and the second position.

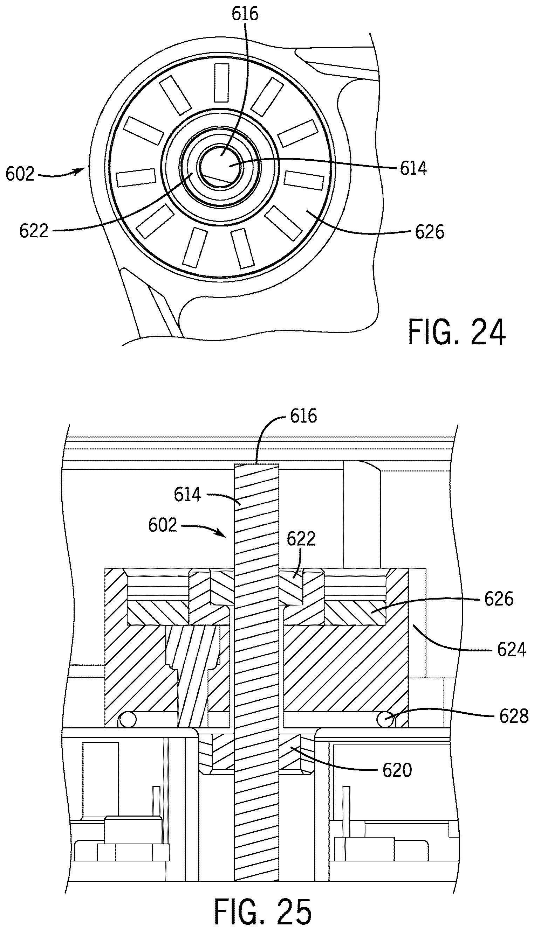

With reference to Fig. 25, a portion of the pivot rod 614 extending above the motor used to rotate the swing arm 600 is illustrated. The pivot rod 614 may be coupled to or may be a motor shaft extending from the end of the motor. As is known in the art, a motor shaft will be supported by a bearing proximate the point at which the motor shaft exits the motor. The motor bearing is included at a point below the partial sectional view of Fig. 25. The pivot rod 614, in addition to the motor bearing, is further supported by a first rolling bearing 620 and a second rolling bearing 622. The first rolling bearing 620 is mounted at a level, such that an upper surface of the first rolling bearing 620 is generally flush with a surface of the track segment 612 on which the movers 100 travel. The second roller bearing 622 is mounted within a support housing 624 for the arm mechanism 604. The support housing 624 for the arm mechanism 604 extends upward from the surface of the track segment 612 on which the movers 100 travel and defines an outer periphery of the pivot 602 on which the arm mechanism 604 rotates. An upper surface of the support housing 624 includes both a thrust bearing 626 with roller bearing elements facing upwards and the second roller bearing 622 coaxially mounted within the thrust bearing 626. The thrust bearing 626 provides support for the axial load applied to the pivot 602 by the arm mechanism 604. The first and second roller bearings 620, 622 provide radial support for the pivot rod 614 extending up from the actuator into the arm mechanism 604. The arrangement of roller bearings 620, 622 and thrust bearing 626 reduce friction between moving elements of the swing arm 600 as the swing arm rotates between the first and second positions. The arrangement of roller bearings 620, 622 and thrust bearing 626 further provide increased support to the swing arm 600 and pivot rod 614 to reduce vibration of the swing arm 600 as the swing arm rotates between the first and second positions.

In addition, a sealing element 628 is provided between a base of the support housing 624 and the surface of the track segment 612 on which the movers 100 travel. According to the illustrated embodiment, the sealing element 628 is an o-ring. The o-ring 628 contains particulate generated by either the first or second roller bearings 620, 622 within the support housing 624. Optionally, still other sealing members may be provided along the periphery of the support housing 624 as desired to reduce particulate generated by the bearings from entering the ambient environment in which the switch track segment 612 is operating.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

**The following is a list of further preferred embodiments of the invention:**
Embodiment 1. A system for reducing particulate generation in an independent cart system, comprising:
   a mover configured to travel along a track having a plurality of track segments, wherein the mover further comprises:
   a plurality of wheels mounted to the mover and operative to engage the track as the mover travels along the track, wherein each of the plurality of wheels includes a rolling bearing by which the corresponding wheel is mounted to the mover;
   a plurality of sealing elements, wherein at least one of the plurality of sealing elements is mounted adjacent to the rolling bearing for each of the plurality of wheels to prevent particulate generated by the rolling bearing from leaving the mover; and
   a plurality of dampening elements to reduce vibration on the mover as the mover travels along the track, wherein at least one of the plurality of dampening elements is mounted to each of the plurality of wheels.
Embodiment 2. The system of embodiment 1 wherein the mover further comprises:
   a drive block containing a plurality of drive magnets, wherein a magnetic field generated by the plurality of drive magnets is operative to engage an electromagnetic field generated by a plurality of coils spaced along the track to drive the mover along the track;
   a platform mounted to an upper surface of the drive block;
   a fastener mounted through the platform to the drive block to secure the platform to the drive block; and
   at least one rolling bearing mounted between the fastener and either the platform or the drive block to provide rotational motion between the fastener and the platform or the drive block.
Embodiment 3. The system of embodiment 2, wherein the at least one rolling bearing includes a first rolling bearing mounted between the fastener and the platform and a second rolling bearing mounted between the fastener and the drive block.
Embodiment 4. The system of embodiment 2, further comprising at least one dampening element mounted between the platform and the drive block.
Embodiment 5. The system of embodiment 4, wherein the dampening element is a vibration reducing pad mounted between a lower surface of the platform and the at least one rolling bearing mounted between the fastener and the drive block.
Embodiment 6. The system of embodiment 2, wherein the drive block is a first drive block, the fastener is a first fastener, and the at least one rolling bearing is at least one first rolling bearing, the system further comprising:
   a second drive block containing a plurality of drive magnets, wherein the platform is mounted to an upper surface of both the first drive block and the second drive block;
   a second fastener mounted through the platform to the second drive block to secure the platform to the second drive block; and
   at least one second rolling bearing mounted between the second fastener and either the platform or the second drive block to provide rotational motion between the fastener and the platform or the second drive block.
Embodiment 7. The system of embodiment 1, wherein the at least one sealing element mounted adjacent to each rolling bearing is selected from an o-ring around an axle for the wheel and a cap mounted over a hub for the wheel.
Embodiment 8. The system of embodiment 1 wherein the track further comprises:
   a plurality of track segments, wherein each track segment includes:
   a first end with a first portion of an alignment bracket integrally formed in the first end of the track segment, and
   a second end with a second portion of the alignment bracket integrally formed in the second end of the track segment; and
   a plurality of removable alignment brackets, wherein each removable alignment bracket mounts over the first portion of the alignment bracket on a first track segment and the second portion of the alignment bracket on a second track segment to align the first track segment in three dimensions with the second track segment.
Embodiment 9. The system of embodiment 8 wherein:
   each of the plurality of removable alignment brackets further comprises an interior volume defined by a first side wall, a second side wall, a first end, a second end, and a front surface;
   the interior volume receives the alignment bracket integrally formed on the track segments; and
   an interior surface of each of the first side wall, the second side wall, the first end, and the second end is tapered to align the alignment bracket within the interior volume.
Embodiment 10. A system for reducing particulate generation in an independent cart system, comprising:
   a track including:
   a plurality of track segments, wherein each track segment includes:
   a first end with a first portion of an alignment bracket integrally formed in the first end of the track segment, and
   a second end with a second portion of the alignment bracket integrally formed in the second end of the track segment;
   a plurality of removable alignment brackets, wherein each removable alignment bracket mounts over the first portion of the alignment bracket on a first track segment and the second portion of the alignment bracket on a second track segment to align the first track segment in three dimensions with the second track segment; and
   a plurality of coils spaced along the track; and
   a mover configured to travel along the track, wherein the mover further comprises:
      a plurality of wheels mounted to the mover and operative to engage the track as the mover travels along the track, wherein each of the plurality of wheels includes a rolling bearing by which the corresponding wheel is mounted to the mover;
      a drive block containing a plurality of drive magnets, wherein a magnetic field generated by the plurality of drive magnets is operative to engage an electromagnetic field generated by the plurality of coils to drive the mover along the track;
      a platform mounted to an upper surface of the drive block;
      a fastener mounted through the platform to the drive block to secure the platform to the drive block; and
      at least one rolling bearing mounted between the fastener and either the platform or the drive block to provide rotational motion between the fastener and the platform or the drive block.
Embodiment 11. The system of embodiment 10, wherein the at least one rolling bearing includes a first rolling bearing mounted between the fastener and the platform and a second rolling bearing mounted between the fastener and the drive block.
Embodiment 12. The system of embodiment 10, further comprising at least one dampening element mounted between the platform and the drive block.
Embodiment 13. The system of embodiment 12, wherein the dampening element is a vibration reducing pad mounted between a lower surface of the platform and the at least one rolling bearing mounted between the fastener and the drive block.
Embodiment 14. The system of embodiment 10, wherein the drive block is a first drive block, the fastener is a first fastener, and the at least one rolling bearing is at least one first rolling bearing, the system further comprising:
   a second drive block containing a plurality of drive magnets, wherein the platform is mounted to an upper surface of both the first drive block and the second drive block;
   a second fastener mounted through the platform to the second drive block to secure the platform to the second drive block; and
   at least one second rolling bearing mounted between the second fastener and either the platform or the second drive block to provide rotational motion between the fastener and the platform or the second drive block.
Embodiment 15. The system of embodiment 10, wherein the track further includes at least one switch track segment, wherein the at least one switch track segment includes:
   a first track connection;
   a second track connection;
   a third track connection; and
   a switch arm configured to selectively direct the mover to travel between the first track connection and the second track connection or to travel between the first track connection and the third track connection, wherein the switch arm includes:
      an actuator to rotate a pivot rod between a first position and a second position,
      an arm mechanism coupled to the pivot rod to engage the mover as the mover travels along the track,
      a first rolling bearing mounted around the pivot rod proximate the arm mechanism,
      a thrust bearing mounted coaxially to the first rolling bearing proximate the arm mechanism, and
      a second rolling bearing mounted around the pivot rod at a location between the actuator and the first rolling bearing.
Embodiment 16. The system of embodiment 15 further comprising:
   a support housing for the switch arm, wherein the first rolling bearing and the thrust bearing are mounted within the support housing; and
   a sealing element mounted between the support housing and a surface on which the support housing is mounted.
Embodiment 17. The system of embodiment 10, wherein:
   each of the plurality of removable alignment brackets further comprises an interior volume defined by a first side wall, a second side wall, a first end, a second end, and a front surface;
   the interior volume receives the alignment bracket integrally formed on the track segments; and
   an interior surface of each of the first side wall, the second side wall, the first end, and the second end is tapered to align the alignment bracket within the interior volume.
Embodiment 18. The system of embodiment 10, wherein each of the movers further comprises a plurality of sealing elements, wherein at least one of the plurality of sealing elements is mounted adjacent to each rolling bearing for the plurality of wheels to prevent particulate generated by the rolling bearing from leaving the mover.
Embodiment 19. The system of embodiment 18, wherein the at least one sealing element mounted adjacent to each rolling bearing is selected from an o-ring around an axle for the wheel and a cap mounted over a hub for the wheel.
Embodiment 20. The system of embodiment 18, wherein each of the movers further comprises a plurality of dampening elements to reduce vibration on the mover as the mover travels along the track, wherein at least one of the plurality of dampening elements is mounted to each of the plurality of wheels.

## Claims

1. A system for reducing particulate generation in an independent cart system, comprising:
a mover configured to travel along a track having a plurality of track segments, wherein the mover further comprises:
a plurality of wheels mounted to the mover and operative to engage the track as the mover travels along the track, wherein each of the plurality of wheels includes a rolling bearing by which the corresponding wheel is mounted to the mover;
a plurality of sealing elements, wherein at least one of the plurality of sealing elements is mounted adjacent to the rolling bearing for each of the plurality of wheels to prevent particulate generated by the rolling bearing from leaving the mover; and
a plurality of dampening elements to reduce vibration on the mover as the mover travels along the track, wherein at least one of the plurality of dampening elements is mounted to each of the plurality of wheels.

2. The system of claim 1 wherein the mover further comprises:
a drive block containing a plurality of drive magnets, wherein a magnetic field generated by the plurality of drive magnets is operative to engage an electromagnetic field generated by a plurality of coils spaced along the track to drive the mover along the track;
a platform mounted to an upper surface of the drive block;
a fastener mounted through the platform to the drive block to secure the platform to the drive block; and
at least one rolling bearing mounted between the fastener and either the platform or the drive block to provide rotational motion between the fastener and the platform or the drive block.

3. The system of claim 2, wherein the at least one rolling bearing includes a first rolling bearing mounted between the fastener and the platform and a second rolling bearing mounted between the fastener and the drive block.

4. The system of claim 2 or 3, further comprising at least one dampening element mounted between the platform and the drive block.

5. The system of claim 4, wherein the dampening element is a vibration reducing pad mounted between a lower surface of the platform and the at least one rolling bearing mounted between the fastener and the drive block.

6. The system of one of claims 2 to 5, wherein the drive block is a first drive block, the fastener is a first fastener, and the at least one rolling bearing is at least one first rolling bearing, the system further comprising:
a second drive block containing a plurality of drive magnets, wherein the platform is mounted to an upper surface of both the first drive block and the second drive block;
a second fastener mounted through the platform to the second drive block to secure the platform to the second drive block; and
at least one second rolling bearing mounted between the second fastener and either the platform or the second drive block to provide rotational motion between the fastener and the platform or the second drive block.

7. The system of one of claims 1 to 6, wherein the at least one sealing element mounted adjacent to each rolling bearing is selected from an o-ring around an axle for the wheel and a cap mounted over a hub for the wheel.

8. The system of one of claims 1 to 7, wherein the track further comprises:
a plurality of track segments, wherein each track segment includes:
a first end with a first portion of an alignment bracket integrally formed in the first end of the track segment, and
a second end with a second portion of the alignment bracket integrally formed in the second end of the track segment; and
a plurality of removable alignment brackets, wherein each removable alignment bracket mounts over the first portion of the alignment bracket on a first track segment and the second portion of the alignment bracket on a second track segment to align the first track segment in three dimensions with the second track segment.

9. The system of claim 8 wherein:
each of the plurality of removable alignment brackets further comprises an interior volume defined by a first side wall, a second side wall, a first end, a second end, and a front surface;
the interior volume receives the alignment bracket integrally formed on the track segments; and
an interior surface of each of the first side wall, the second side wall, the first end, and the second end is tapered to align the alignment bracket within the interior volume.

10. A system for reducing particulate generation in an independent cart system, comprising:
a track including:
a plurality of track segments, wherein each track segment includes:
a first end with a first portion of an alignment bracket integrally formed in the first end of the track segment, and
a second end with a second portion of the alignment bracket integrally formed in the second end of the track segment;
a plurality of removable alignment brackets, wherein each removable alignment bracket mounts over the first portion of the alignment bracket on a first track segment and the second portion of the alignment bracket on a second track segment to align the first track segment in three dimensions with the second track segment; and
a plurality of coils spaced along the track; and
a mover configured to travel along the track, wherein the mover further comprises:
a plurality of wheels mounted to the mover and operative to engage the track as the mover travels along the track, wherein each of the plurality of wheels includes a rolling bearing by which the corresponding wheel is mounted to the mover;
a drive block containing a plurality of drive magnets, wherein a magnetic field generated by the plurality of drive magnets is operative to engage an electromagnetic field generated by the plurality of coils to drive the mover along the track;
a platform mounted to an upper surface of the drive block;
a fastener mounted through the platform to the drive block to secure the platform to the drive block; and
at least one rolling bearing mounted between the fastener and either the platform or the drive block to provide rotational motion between the fastener and the platform or the drive block.

11. The system of claim 10, at least one of:
wherein the at least one rolling bearing includes a first rolling bearing mounted between the fastener and the platform and a second rolling bearing mounted between the fastener and the drive block;
further comprising at least one dampening element mounted between the platform and the drive block,
wherein preferably the dampening element is a vibration reducing pad mounted between a lower surface of the platform and the at least one rolling bearing mounted between the fastener and the drive block; and
wherein the drive block is a first drive block, the fastener is a first fastener, and the at least one rolling bearing is at least one first rolling bearing, the system further comprising:
a second drive block containing a plurality of drive magnets, wherein the platform is mounted to an upper surface of both the first drive block and the second drive block;
a second fastener mounted through the platform to the second drive block to secure the platform to the second drive block; and
at least one second rolling bearing mounted between the second fastener and either the platform or the second drive block to provide rotational motion between the fastener and the platform or the second drive block.

12. The system of claim 10 or 11, wherein the track further includes at least one switch track segment, wherein the at least one switch track segment includes:
a first track connection;
a second track connection;
a third track connection; and
a switch arm configured to selectively direct the mover to travel between the first track connection and the second track connection or to travel between the first track connection and the third track connection, wherein the switch arm includes:
an actuator to rotate a pivot rod between a first position and a second position,
an arm mechanism coupled to the pivot rod to engage the mover as the mover travels along the track,
a first rolling bearing mounted around the pivot rod proximate the arm mechanism,
a thrust bearing mounted coaxially to the first rolling bearing proximate the arm mechanism, and
a second rolling bearing mounted around the pivot rod at a location between the actuator and the first rolling bearing,
the system preferably further comprising:
a support housing for the switch arm, wherein the first rolling bearing and the thrust bearing are mounted within the support housing; and
a sealing element mounted between the support housing and a surface on which the support housing is mounted.

13. The system of one of claims 10 to 12, wherein:
each of the plurality of removable alignment brackets further comprises an interior volume defined by a first side wall, a second side wall, a first end, a second end, and a front surface;
the interior volume receives the alignment bracket integrally formed on the track segments; and
an interior surface of each of the first side wall, the second side wall, the first end, and the second end is tapered to align the alignment bracket within the interior volume.

14. The system of one of claims 10 to 13, wherein each of the movers further comprises a plurality of sealing elements, wherein at least one of the plurality of sealing elements is mounted adjacent to each rolling bearing for the plurality of wheels to prevent particulate generated by the rolling bearing from leaving the mover.

15. The system of claim 14, at least one of:
wherein the at least one sealing element mounted adjacent to each rolling bearing is selected from an o-ring around an axle for the wheel and a cap mounted over a hub for the wheel; and
wherein each of the movers further comprises a plurality of dampening elements to reduce vibration on the mover as the mover travels along the track, wherein at least one of the plurality of dampening elements is mounted to each of the plurality of wheels.
